# EUROPEAN PATENT SPECIFICATION

(11) **EP 2 611 162 B1**
(45) Date of publication and mention of the grant of the patent: **27.08.2014**
(21) Application number: 12189602.1
(22) Date of filing: 23.10.2012
(51) Int. Cl.: H04N 13/00, H04N 13/04

(54) **Apparatus and method for displaying**
Vorrichtung und Verfahren zum Anzeigen
Appareil et procédé d'affichage

(30) Priority: 30.12.2011 KR 20110147298; 16.07.2012 KR 20120077278
(43) Date of publication of application: 03.07.2013
(73) Proprietor: Samsung Electronics Co., Ltd., Suwon-si, Gyeonggi-do, 443-742 (KR)
(72) Inventor: Kim, Hak-jae, Gyeonggi-do (KR); Lim, Jae-hyo, Gyeonggi-do (KR); Choi, Hoon, Gyeonggi-do (KR)
(74) Representative: Robinson, Ian Michael

(56) References cited:
- EP-A1- 2 385 706
- WO-A1-2011/118815
- WO-A2-2011/099780
- US-A1- 2004 257 337
- US-A1- 2009 278 918
- US-A1- 2011 012 812
- US-A1- 2011 285 834

## Description

### BACKGROUND

### 1. Field

Apparatuses and methods consistent with the disclosure provided herein relate to displaying, and more particularly, to a display apparatus providing different contents to a plurality of users and a display method thereof.

### 2. Description of the Related Art

Since electronic technologies are developing, electronic products are being made, sold, and disseminated. Specifically, display apparatuses such as the TVs, mobile phone, PC, laptop computer, and PDA are mainly utilized by most families.

Since the utilization of the display apparatuses has increased, consumer needs for new functions have also increased. Thus, electronic manufacturers work hard to meet the consumer needs and as a result, new products having new functions such as provision of three dimensional (3D) contents have been launched.

Recently, a display apparatus for providing a plurality of contents simultaneously and enabling a plurality of users to view different contents simultaneously has been newly developing. Document EP 2 536 155 A2 discloses a 3D image display apparatus with multi-view operation in which OSD information can be displayed only to the corresponding viewer. In particular, the OSD information may help the user select a desired video source. However, if one user requests the OSD information to change the display attributes of the content, the display apparatus has the problem of displaying the on-screen display (OSD) information in the way of contents that other users are viewing. Thus, other users may feel uncomfortable in viewing the contents or may be inconvenienced by the presence of the OSD information.

### SUMMARY

According to the present invention there is provided an apparatus and method as set forth in the appended claims. Other features of the invention will be apparent from the dependent claims, and the description which follows.

Exemplary embodiments overcome the above disadvantages and other disadvantages not described above. Also, the present inventive concept is not required to overcome the disadvantages described above, and an exemplary embodiment of the may not overcome any of the problems described above.

According to one exemplary embodiment, a technical objective is to display OSD information for changing display attributes of content, without bothering other users who are viewing different contents.

In one exemplary embodiment, a display apparatus may include a plurality of receivers which receive a plurality of contents; a signal processor which processes the plurality of contents received at the plurality of receivers to construct a plurality of content views; an outputter which displays each of the plurality of content views constructed at the signal processor; an inputter which receives a command to display an on-screen display (OSD); a controller which determines a content view in which to display OSD information, from among the plurality of contents views, in response to the command to display OSD, and an OSD processer which generates the OSD information to be displayed on the determined content view and provides the generated OSD information to the outputter.

The display apparatus may additionally include a storage which stores information about a plurality of input devices which correspond to each of the plurality of contents. If the command to display the OSD is inputted from one of the plurality of input devices, the controller may control the OSD processor to display the OSD information related to a specific content that corresponds to the one of the plurality of input devices transmitting the command to display the OSD.

The input device may be one of a remote control unit and glasses.

The controller may select a control target from among the plurality of contents views according to a remote signal inputted from a remote control unit, process the control target according to the remote signal when the remote signal is inputted from the remote control unit in a state where one content view is selected as the control target, and controls the OSD processor to display the OSD information on the content view which is determined as the control target when a command to display OSD display is inputted from the remote control unit.

The controller may control the OSD processer to delete the OSD information displayed on a first content view and to display the OSD information on a second content view, when a command to display OSD regarding the second content view is inputted, in a state where the OSD information is displayed on the first content view.

The OSD information may include at least one OSD menu for changing contents display characteristics, and the controller may control the signal processor to change the display characteristics of the content view where the OSD information is displayed according to a changed user set value, when the user set value is changed in the at least one OSD menu.

The outputter may combine the plurality of contents views in image frame units, and displays the results.

The display apparatus may additionally include a sync signal generator which generates a sync signal which synchronizes glasses corresponding to each content according to a display timing of the plurality of contents views; and an interface unit which transmits the sync signal to the glasses.

In one exemplary embodiment, a display method may include receiving a plurality of contents, processing the received plurality of contents to construct a plurality of contents views; displaying each of the constructed plurality of contents views; inputting a command to display an on-screen display (OSD); determining a content view on which display the OSD information from among the plurality of contents views, when the OSD command is inputted; and displaying the OSD information on the determined content view.

The displaying may comprise displaying the OSD information on the content view corresponding to an input device among a plurality of input devices, wherein the plurality of input devices transmit the OSD display command using stored information on the plurality of input devices, when the OSD display command is received from one of the plurality of input devices.

The input device may be one of a remote control unit and glasses.

The displaying comprises selecting a control target from among the plurality of contents views according to a remote signal is inputted from a remote control unit, and displaying the OSD information on the content view which is selected as the control target when the OSD display command is inputted from the remote control unit.

The displaying comprises deleting the OSD information displayed on a first content view and displaying the OSD information on the second content view, when an OSD display command regarding the second content view is inputted, in a state where the OSD information is displayed on the first content view.

The OSD information may include at least one OSD menu for changing contents display characteristics, and the method may further include changing display characteristics of the content view where the OSD information is displayed and displaying the result, according to a changed user set value, when the user set value is changed in the at least one OSD menu.

The displaying may comprises combining the plurality of contents views in image frame units, and displaying the result.

The display method may further include generating a sync signal which synchronizes glasses corresponding to each content according to display timing of the plurality of contents views; and transmitting the sync signal to the glasses.

In one exemplary embodiment, a display apparatus may include a plurality of receivers which receive a plurality of contents; a signal processor which processes the plurality of contents received at the plurality of receivers, to construct a plurality of content views; an outputter which displays each content view constructed at the signal processor; an inputter which receives an OSD display command; an OSD processor which displays respective OSD information on each of the plurality of contents views, when the OSD display command is inputted; and a controller which controls each of the OSD information according to each control signal, when a control signal corresponding to each of the plurality of contents views is inputted.

In one exemplary embodiment, a display method may include receiving a plurality of contents; processing each of the received plurality of contents to construct a plurality of contents views; displaying each of the constructed plurality of contents views; receiving an OSD display command; displaying respective OSD information on each of the plurality of contents views, when the OSD display command is inputted; receiving the OSD display command; and controlling each of the respective OSD information according to each control signal when a control signal corresponding to each of the plurality of contents views is inputted.

In another exemplary embodiment, a display apparatus comprises: at least one receiver which receives a plurality of contents; a signal processor which processes the plurality of contents received at the at least one receiver, to construct a plurality of contents views; an outputter which displays respective content views from among the plurality of content views; and inputter which receives a command to display an on-screen display (OSD); a controller which determines a content view in which to display on-screen display OSD information, from among the plurality of contents views, in response to the command to display the OSD; and an OSD processor which generates the OSD information to be displayed on the determined content view.

In yet another exemplary embodiment, a display apparatus comprises: at least one receiver which receives a plurality of contents; a signal processor which processes the plurality of contents received at the at least one receiver, to construct a plurality of contents views; an outputter which displays each one of the plurality of contents views; an inputter which receives an on-screen display (OSD) display command; an OSD processor which displays respective OSD information on each of the plurality of contents views, when the OSD display command is inputted; and a controller which controls each of the respective OSD information according to each control signal, when respective control signals corresponding to each of the plurality of contents views are inputted

In various embodiments, during an operation of combining a plurality of contents and displaying the result, the display apparatus is able to display OSD information on a specific content view. As a result, a plurality of users can continue viewing the contents without being unnecessarily bothered or inconvenienced.

### BRIEF DESCRIPTION OF THE DRAWINGS

The above and/or other aspects of exemplary embodiments will be more apparent with reference to the accompanying drawings, in which:
FIG. 1 is a diagram illustrating a system for providing a plurality of contents to a plurality of users according to an embodiment;
FIG. 2 is a block diagram of a display apparatus according to an exemplary embodiment;
FIG. 3 is a block diagram of a signal processor constructing image frames of a plurality of contents of a display apparatus according to an exemplary embodiment;
FIG. 4 is a block diagram of another composition of a display apparatus;
FIG. 5 is a block diagram of glasses according to an exemplary embodiment; and
FIG. 6 is a flowchart illustrating a method for displaying a plurality of contents and OSD information on a display apparatus according to an exemplary embodiment.

### DETAILED DESCRIPTION OF EXEMPLARY EMBODIMENTS

Referring to the attached drawings, the invention will be described in detail below.

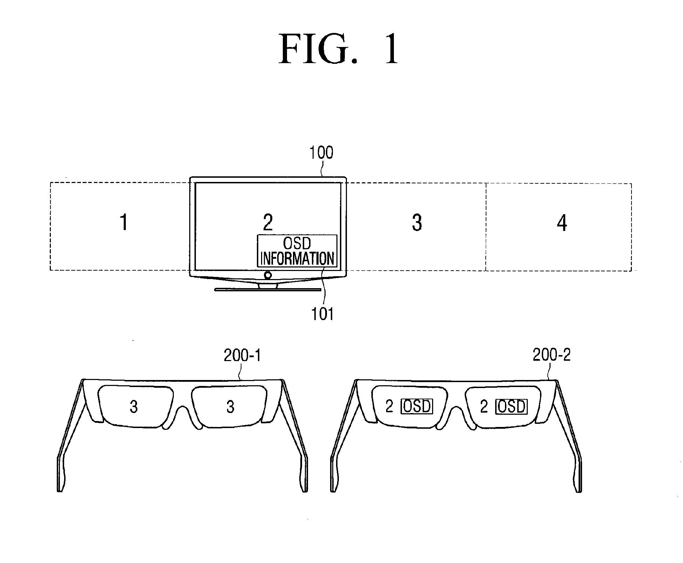

FIG. 1 is a diagram of a system for providing a plurality of contents to a plurality of users according to an embodiment.

Referring to FIG. 1, the system may include a display apparatus 100 and glasses 200.

The display apparatus 100 may process a plurality of contents and display a plurality of content views, and transmit sync signals corresponding to the display timing of each content view to the glasses 200. FIG. 1 exemplified a display system which processes each of 4 contents and creates 4 content views. A function of providing a plurality of content views as in FIG. 1 may be called a multi view function. Depending on the performance of a system, the number of the contents views may be limited to 2, or may be plural from 2 to n (n being a natural number). A mode which provides 2 content views may be called a dual view mode, while a mode which provides 3 content views may be called a triple view mode, and a mode which provides 4 content views may be called a quadruple view mode, etc. All of these modes may be called a multi-view mode. FIG. 1 illustrated a system operating in a quadruple view mode.

Each glasses (200-1, 200-2) may control open timing of the shutter in accordance with the sync signal. That is, the glasses (200-1, 200-2) may open the shutter glasses during the time the corresponding content views are displayed, enabling a user to view one of the plurality of contents.

FIG. 1 illustrates a state where first glasses (200-1) are matched to content view 3. In this case, the first glasses (200-1) may open the shutter glasses at the timing of displaying content view 3 from among the displayed contents views, in accordance with the sync signals received from the display apparatus 100.

As explained above, the first glasses (200-1) may open the shutter glasses at the display timing of content view 3, and a user may watch content view 3 from among the contents displayed on the displaying apparatus 100 through the first glasses (200-1) he or she is wearing.

Meanwhile, second glasses (200-2) may open the shutter glasses at the display timing of content view 2 from among the plurality of alternately displayed contents views 2 in accordance with the sync signals received from the display apparatus 100.

Accordingly, the user wearing the second glasses (200-2) that open the shutter glasses 200 at the display timing of content view 2, may watch content view 2 from among the plurality of content views displayed on the display apparatus 100 through the second glasses 200-2 he or she is wearing.

The user wearing each glasses (200-1, 200-2) may select a contents view which the user wants to see using various input means such as a button provided in the glasses or remote control unit. For example, in a case where a button is provided in glasses, each glasses (200-1, 200-2) select contents views 1, 2, 3, and 4 consecutively whenever a button is selected and is synchronized to the contents view. Otherwise, in a case where a number of buttons corresponding to a number of entire content views are provided in the glasses, it is possible to press a certain button so that a contents view which corresponds to that button is directly synchronized.

Meanwhile, the user viewing a certain content view with each glasses (200-1, 200-2) from among the plurality of content views may request displaying OSD (on screen display) using an input device such as input buttons provided on the glasses he or she is wearing (200-1, 200-2) or a remote control unit. If the command to display the OSD is inputted, the display apparatus 100 may add OSD and display the OSD along with the image frame of the corresponding content view from among the plurality of displayed contents views in response to the command to display the OSD. The command to display the OSD may be defined in various types, and the content views which correspond to the command to display OSD may also be determined in various types. These exemplary embodiments will be explained hereinafter in more detail.

As illustrated in the drawings, the user wearing the second glasses (200-2) may view content view 2 from among the plurality of contents views provided by the display apparatus 100. While viewing content view 2, the user may request to display OSD through the second glasses (200-2) he or she is wearing or through a remote control unit. In response to a command to display OSD as inputted, the display apparatus 100 may analyze the inputted OSD display request and confirm that a command to display OSD information has been made regarding contents view 2. After that, the display apparatus 100 may add the OSD information 101 requested by the user to the displayed content view 2, that is, an image frame of contents 2 from among the plurality of displayed content views, and display the result.

Accordingly, the user wearing the second glasses (200-2) may watch content view 2, while also viewing the OSD information added to content view 2. On the other hand, the user wearing the first glasses (200-1) which is synchronized to another content view cannot see the OSD information. Therefore, in a case where the user wearing the second glasses (200-2) intends to confirm the OSD information, the viewing of the user wearing the first glasses (200-1) is not interrupted by the OSD information.

The system including the display apparatus 100 for providing a plurality of contents and the glasses (200-1, 200-2) for viewing the plurality of contents provided by the display apparatus 100 has been briefly explained so far.

The respective constituents of the display apparatus 100 and the glasses (200-1, 200-2) will be explained in greater detail below.

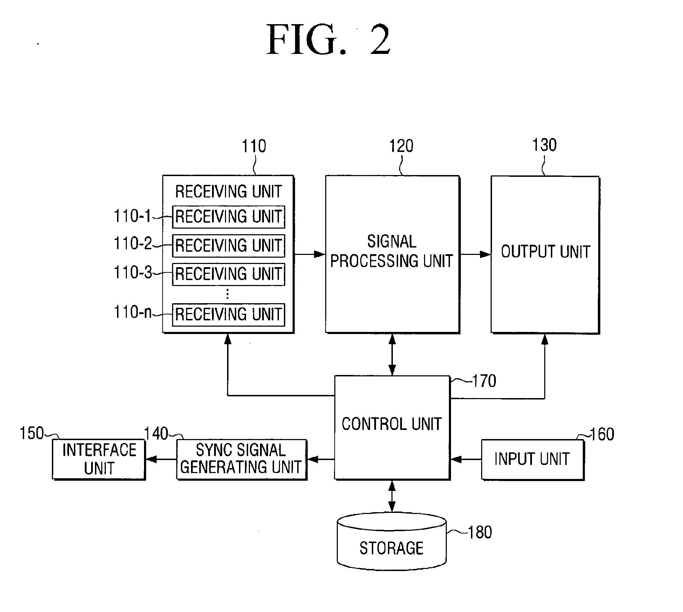

FIG. 2 is a block diagram of a display apparatus according to an exemplary embodiment.

Referring to FIG. 2, the display apparatus may include a receiving unit 110, a signal processing unit 120, an output unit 130, a sync signal generating unit 140, an interface unit 150, an input unit 160, a control unit 170, and a storage unit 180.

There may be a plurality of receiving units, and it is possible to receive a plurality of different contents through the plurality of receiving units 110-1, 110-2, ..., 110-n. In one exemplary embodiment, the plurality of receiving units 110-1, 110-2, ..., 110-n may be embodied to be different types of constituent elements. To be specific, the receiving units 110-1, 110-2, ..., 110-n may each receive contents from a broadcasting station which transmits broadcast program contents using a broadcast network, or from the web server which transmits the content files using the internet. Further, some of the receiving units 110-1, 110-2, ..., 110-n may receive the content from a variety of recording medium playback devices either provided in, or connected to the display apparatus. The recording medium playback device refers to a device which plays the contents stored on the various recording medium such as the CD, the DVD, the hard disk, the blu-ray disk, the memory card or the USB memory.

A receiving unit which receives content from the broadcasting station may be designed to include a tuner (not illustrated), a demodulator (not illustrated), or an equalizer (not illustrated). If the content is received from a source device such as a web server, or from an external device such as digital versatile disk (DVD), or personal computer (PC), the receiving unit receives the contents through various interfaces such as the SCART, the audio/video AV, the high-definition multimedia interface (HDMI), the COMPONENT, or the universal serial bus (USB) interface.

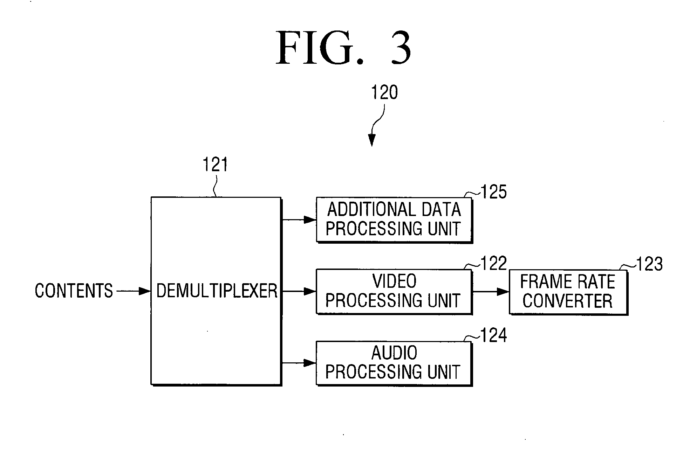

The signal processing unit 120 may process different contents received from the plurality of receiving units 110-1, 110-2, ..., 110-n and construct a plurality of convent views using the image frames of each content. There may be a plurality of signal processing units to correspond to the plurality of receiving units 110-1, 110-2, ..., 110-n to process the contents received from the plurality of receiving units 110-1, 110-2, ..., 110-n and construct the image frames. However, an exemplary embodiment is not limited to the foregoing. Accordingly, there may be one signal processing unit 120 operating to process different contents received from the plurality of receiving units 110-1, 110-2, ..., 110-n and construct the image frames regarding the respective contents. FIG. 2 illustrates an exemplary embodiment where one signal processing unit 120 is used. The operation of the signal processing unit 120 will be explained in greater detail below with reference to FIG. 3.

FIG. 3 is a block diagram of a signal processing unit for constructing the image frames of the plurality of contents in the display apparatus according to an exemplary embodiment.

Referring to FIG. 3, the signal processing unit 120 may include a demultiplexer 121, a video processing unit 122, a frame rate converting unit 123, an audio processing unit 124 and an additional data processing unit 125. The demultiplexer 121 may separate the video, audio data, and additional data from the contents.

The video processing unit 122 may process signals regarding the video data of the content separated at the demultiplexer 121. In one exemplary embodiment where one signal processing unit 120 is used, the demultiplexer demultiplexes each content received from the plurality of receiving units consecutively, and the video processing unit 122 performs signal processing on the video data included in each content.

To be specific, the video processing unit 122 may include a decoder (not illustrated) which decodes the video data, and a scaler (not illustrated) which scales up or down the data to the screen size of the output unit 130. The video processing unit 122 may convert the video data into data format corresponding to the frame rate converter 123. To be specific, if the inputted video data is top-to-bottom format and the frame rate converter 123 processes the frame in side-by-side format, the video processing unit 122 may connect the image frames of contents horizontally to convert the frames into side-by-side format. In addition, an OSD processing unit may be included in the video processing unit 122. The OSD processing unit and the scaler may be embodied as one chip. Accordingly, the scaler may generate an image frame using the decoded data, and then add the OSD information generated by the OSD processing unit to the image frame.

The frame rate converter 123 may convert the frame rate of the contents provided from the video processing unit 122 to match the multi-contents display rate by referring to the outputting rate of the display apparatus. To be specific, if the display apparatus operates at 60Hz, in a dual view mode, the frame rate converter 122 may convert the frame rate of the respective contents to 120Hz.

The audio processing unit 124 may process signals regarding the audio data separated from the content at the demultiplexer 121. The audio processing unit 124 may include an audio decoder (not illustrated) which decodes the audio data of the content separated at the demultiplexer 121, and a demodulator (not illustrated) which demodulates the decoded audio data to different frequency signals.

In the exemplary embodiment where a plurality of signal processing units are provided as aforementioned, a first signal processing unit may receive content 1 from one receiving unit 110-1, while a second signal processing unit 120-2 may receive content 2 from another receiving unit 110-2. In this example, the audio processing units 124 in each signal processing unit may demodulate the audio data of content 1 and content 2 to different frequency signals. If the data are modulated to different frequency signals, the output unit 130 may transmit the demodulated audio data to the glasses. As a result, the user may listen to the audio related to the content through an output means such as earphone provided with the glasses. Since the detailed elements of the audio processing unit 124 are less relevant to embodiments, further detailed description thereof will be omitted for the sake of brevity.

In addition, the signal processing unit 120 includes an additional data processing unit 125. Depending on situations, the content may include additional data such as the Electronic Program Guide (EPG) or the subtitles. In such an example, the demultiplexer 121 of the signal processing unit 120 may additionally separate the additional data from the content. If the additional data is separated, the additional data processing unit 125 may add the data separated at the demultiplexer 121 to the relevant image frame.

The output unit 130 includes a display panel (not illustrated), a speaker (not illustrated), and an radio frequency (RF) communication module etc. The display panel displays a video frame processed in the video processing unit 122 and the frame rate converter 123. To be specific, the output unit 130 may combine the contents outputted from the frame rate converter 123 of the signal processing unit 120 to construct multi content frames. That is, the output unit 130 may carry out multiplexing so that the image frame of the contents provided from the frame rate converter 123 of the signal processing unit 120 are arranged alternately at least one by one. The output unit 130 may then scale up the multiplexed data to the screen size to construct the multi content frames, that is a plurality of convent views, and display the image frames. As used herein, the 'multi content frame' refers to the frame data constructed for a plurality of users to view a plurality of contents each. The method for constructing the multi content frames may be implemented variously depending on the method for driving the display apparatus.

By way of example, if the display apparatus coworks (works cooperatively) with the shutter glasses, the output unit 130 may construct the multi content frame so that the image frames of the first and second contents are arranged alternately at least one by one, and display the result. Meanwhile, the user may wear the glasses operating in association with the display timing of the output unit 130, to view the desired content from among content 1 and content 2. To be specific, the glasses may include a left-eye shutter glass and a right-eye shutter glass. The left-eye and right-eye shutter glasses of the glasses may be alternately on or off for viewing three-dimensional (3D) contents. However, as described above, for viewing the image frames in which image frames are arranged alternately at least one by one, the left-eye and right-eye shutter glasses of the glasses may be on or off simultaneously in accordance with the timing of outputting the contents which are synchronized with the glasses. Accordingly, the user may view the content irrespective of the other users.

Meanwhile, the contents may be two-dimensional (2D) or 3D contents. The 3D contents refer to the contents utilizing multi-perspective image showing the object from the several different views and providing the feeling of depth to the user. If a plurality of 3D contents are received, the output unit 130 may multiplex the left-eye and right-eye images included in each of 3D contents in the predetermined placement and may arrange alternately with the image frames of the other contents.

For example, if content 1 and content 2 are 3D image contents and if content 3 is 2D image content, the output unit 130 may alternately arrange the left-eye image frame of content 1, the right-eye image frame of content 1, the left-eye image frame of content 2, the right-eye image frame of content 3, and image frame of content 3 in the order of outputting the image frames from the frame rate converter 123 of the signal processing unit 121, and display the result.

The speaker included in the output unit 130 outputs the audio signal decoded in the audio decoder in the audio processing unit 124. In addition, the RF communication module broadcasts the frequency signals modulated in an audio modulator in the audio processing unit 124 in an RF communication method. The speaker and the RF communication module may operate selectively according to operations of the display apparatus 100. For example, when the display apparatus 100 operates in a general mode, the control unit 170 may output audio signals through the speaker, but when the display apparatus 100 operates in the aforementioned multi view mode, the control unit 170 may output audio signal of each content using the RF communication module. An audio signal output in an RF signal type is received by each glasses (200-1, 200-2), and is output through a sound output means such as an earphone or speaker provided in the glasses. The glasses may select a frequency signal corresponding to the synchronized content view, and enables the user to hear the audio signal of the content corresponding to the corresponding content view together with the content view.

Meanwhile, the sync signal generating unit 140 may generate the signals for synchronizing the glasses corresponding to the contents according to the display timing of the respective contents. That is, the sync signal generating unit 140 may generate the signals for synchronizing the glasses to the display timing of the image frame of the contents in a multi view mode.

The interface unit 150 may communicate with the glasses. To be specific, the interface unit 150 may transmit the sync signals generated at the sync signal generating unit 140 to the glasses. The interface unit 150 may transmit the sync signals to the glasses in various manners.

For example, the interface unit 150 may generate the sync signals into a transmitting packet according to the Bluetooth communication standards and transmit the signals to the glasses. The transmitting packet may be synchronized with the display timing of a plurality of contents and include on or off time information of the left-eye and the right-eye shutter glasses of the glasses. To be specific, the time information in the transmitting packet may include the left shutter open offset time, left shutter close offset time, right shutter open offset time, and right shutter close offset time.

The offset time may be delay information from a preset time of the respective contents until left-eye and right-eye shutter glass on or off time. That is, if the offset time elapses from the reference time, the glasses may on/off the left-eye and the right-eye shutter glasses. For example, the preset time may be the time point of generating the orthogonal sync signals (i.e., frame sync) from the image frame. The information of the preset time may be included in the transmitting packet. The glasses may set the point of generating the orthogonal sync signals to on/off the left-eye and the right-eye shutter glasses based on the reference time information included in the received transmitting packet.

In order to perform the Bluetooth communication, the interface unit 150 may transmit and receive the Bluetooth address or the pin codes to carry out pairing according to the Bluetooth communication standard with the glasses. After pairing, the interface unit 150 may register the glasses information such as glasses identification information. After that, the interface unit 150 may match the display timing of the respective contents and the glasses information, and transmit the transmission packet to the glasses based on the identification information acquired from pairing.

The glasses in receipt of the transmission packet may check the display timing based on the information included in the received transmission packet, and turn on/off the left-eye and the right-eye shutter glasses according to the found display timing.

For example, while the image frames of content 1 and content 2, that is the first and second content view are displayed alternately, the interface unit 150 may send the sync signals generated at the sync signal generating unit 140 to the glasses 1 and glasses 2 according to the Bluetooth communication standard. The sync signal transmitted to glasses 1 may include the information regarding time and reference time point to operate the left-eye and the right-eye shutter glasses of glasses 1 according to the display timing of content 1. The transmission packet transmitted to glasses 2 may include the information of time and reference time point to operate the left-eye and the right-eye shutter glasses of glasses 2 according to the display timing of content 2.

Accordingly, based on the information included in the received transmission packet, the glasses 1 may turn on the left-eye and right-eye shutter glasses in the display timing during which the image frames of the content 1 are displayed, and turn off the left-eye and right-eye shutter glasses in the display timing during which the image frames of the content 2 are displayed.

Meanwhile, based on the information included in the received transmission packet, the glasses 2 may turn on the left-eye and right-eye shutter glasses in the display timing during which the image frames of the content 2 are displayed, and turn off the left-eye and right-eye shutter glasses in the display timing during which the image frames of the content 1 are displayed.

As a result, the user wearing the glasses 1 can view the content 1, while the user wearing the glasses 2 can view the content 2.

In another exemplary embodiment, the interface unit 150 may send a sync signal to the glasses using other communication methods besides the Bluetooth communication standard. For example it may provide the glasses with an infrared (IR) sync or radio frequency (RF) sync signal of different frequencies. In one example, the glasses may receive the sync signal of a specific frequency and turn on or off the shutter glasses according to the display timing of the corresponding content.

In the above exemplary embodiment, the interface unit 150 may transmit the IR signal repeating high level for cycle 1 and low level for cycle 2 at preset time intervals, based on the information included in the sync signal. The glasses may turn on the shutter glasses during the cycle 1 (i.e., high level), and turn off the shutter glasses during the cycle 2 (i.e., low level). The sync signal may be generated in various other manners in addition to the examples explained above.

Although the interface unit 150 and the glasses communicate with each other by Bluetooth communication or IR or RF communication in the examples explained above, such have been written only for illustrative purpose. Accordingly, communication methods other than Bluetooth communication, such as IR communication, or Zigbee communication may be used, or various wireless communication methods may also be implemented, in which case the remote distance communication channels may be formed to transmit and receive signals.

Meanwhile, the input unit 160 may receive a command to display OSD to control the overall operation of the display apparatus through an external input device. The input device may be one of remote control unit and glasses. The input unit 160 may be embodied in various types such as an IR signal receiving unit, a light receiving diode, an RF receiving chip, etc.

A command to display OSD can not only be commands to display an OSD menu to control operations of the display apparatus 100 or commands to display broadcasting information in an OSD type, but may also be types of commands for cases where additional OSDs are displayed for performing a specific operation such volume adjusting, channel number inputting, channel adjusting, and adjusting display characteristics such as brightness or contrast, etc. Therefore, OSD information may include various types of objects such as a screen adjusting OSD menu for optimizing the screen size and brightness, channel adjusting OSD menu, volume level display OSD, EPG, OSD menu for setting equipment operations, channel numbers, OSD graph which shows the extent of display characteristics adjustment, dates and time etc. Meanwhile, in an exemplary embodiment where a command to display OSD is sent according to the Bluetooth communication standard, a command to display OSD may be received through the interface unit 150.

As aforementioned, if the command to display OSD is inputted to the input unit 160, the control unit 170 determines the content view at which to display the OSD information from among the plurality of contents views; one content view corresponds to the command to display OSD. And then, the control unit 170 controls the signal processing unit 120 and the output unit 140 to add OSD information to the determined content view and display the result. The OSD information may preferably include at least one OSD menu to change the display attributes of at least one content from among the plurality of received contents. As aforementioned, the OSD information may include a screen adjustment OSD menu for optimization of size and brightness of a screen on which the content is displayed, or a channel adjustment OSD menu.

The content view corresponding to the command to display OSD may be determined in various methods according to the exemplary embodiments.

In one exemplary embodiment where operations of the display apparatus 100 is controlled by one remote control unit, while the image frames of the contents 1, 2 are displayed alternately, using the input buttons provided on the remote control unit, the user may select the content to display along with the OSD information and request the OSD information. For example, if the user selects the content to display along with the OSD information and inputs a request for OSD information, the remote control unit may transmit OSD display command information including a command to display OSD.

In the above example, the control unit 170 may control the signal processing unit 120 in accordance with the command to select the content 1 included in the OSD display command information so that the OSD information is additionally displayed with respect to the image frames of the content 1 from among the image frames of the contents 1 and 2. According to the control command, the signal processing unit 120 adds OSD information to the image frames of the content 1 generated through the video processing unit 122, and displays the image frames of the content 1 to which the OSD information is added, and the image frames of the content 2 through the screen in an alternate manner.

As a result, among the user viewing the content 1 through the glasses and the user viewing the content 2 through other glasses, only the user viewing the content 1 is able to view the OSD information.

Otherwise, in a case where operations of the display apparatus 100 are controlled by one remote control unit, the control unit 170 may determine the content view which may be controlled by the remote control unit at the time when the command to display OSD is inputted as the content view which corresponds to the command to display OSD from among the plurality of contents views. That is, the control unit 170 may determine the control target from among the plurality of contents views, according to the content view selecting signal received from the remote control unit.

For example, in a case where each content view matches each number key, when number 1 key is inputted in the remote control unit, content view 1 is determined as the control target. The control unit 170 stores information on the content view determined as the control target in a predetermined storage area such as an internal register or additional memory. Thereafter, when various control signals such as those for volume adjusting or channel changing etc. are input, the control unit 170 checks information on the current content view determined as the control target from the predetermined storage area. In the aforementioned exemplary embodiment, content view 1 has been determined as the control target, and thus the control unit 170 performs operations of adjusting audio volume or changing broadcasting channels provided to that content view only regarding content view 1. In addition, the control unit 170 displays OSD information on volume level or channel number, etc. related to that content view 1. Even if another command to display OSD is inputted, the control unit 170 displays OSD information 101 on content view 1 which is the current target control. On the other hand, if number 2 key is inputted, the control unit 170 determines content view 2 as the control target, and if there is a command to display OSD, displays OSD information 101 on content view 2.

Otherwise, each content view and each direction key may be designed to match each other. That is, in a dual view mode, when a left direction key is inputted in a remote control unit, content view 1 may be determined as the control target, and when a right direction key is inputted, content view 2 may be determined as the control target. In this state, when an event to display OSD information occurs, OSD information is displayed only on the content view determined as the control target.

Otherwise, if one of the keys in the remote control unit is matched with a function of converting a control target, the remote control unit may send a content view selecting signal whenever that key is selected. The control unit 170 changes the control target among the plurality of contents views whenever the content view selecting signal is received. That is, the control unit 170 consecutively selects the content view according to the number of times the content view selecting signal is inputted. For example, when a command to change the control target is received in a state where content view 1 is determined as the control target, the control unit 170 changes the control target to content view 2. Thereafter, when a command to display OSD is inputted, the control unit 170 displays OSD information on the content view which is the control target.

Meanwhile, according to an additional aspects of an exemplary embodiment, the display apparatus may additionally include a storage unit 180 which stores information about a plurality of input devices. In a case where a storage unit 180 is further included, the control unit 170 may determine a content view which corresponds to the command to display OSD based on that information. The plurality of input devices may include a remote control unit or glasses, and the information stored in the storage unit 180 regarding the plurality of input devices may be the identification information of a plurality of remote control units or identification information of a plurality of glasses, or information on a content view matching each input device etc.

Accordingly, if a command to display OSD is received from one of the plurality of input devices, the control unit 170 may control the signal processing unit 120 and the output unit 130 to add OSD information, to display along with the specific content view from among the plurality of contents that corresponds to the input device sending the command to display the OSD.

For example, in a case of using a plurality of remote control units, when a command to display OSD is received from a first remote control unit from among a plurality of remote control units, the control unit 170 may use the information stored in the storage unit 180 to control the signal processing unit 120 and output unit 130 to add the OSD information to the content view 1 which matches the first remote control unit, and display it. Meanwhile, when a command to display OSD is received from a second remote control unit, the control unit 170 may use the information stored in the storage unit 180 to control the signal processing unit 120 and the output unit 130 to add the OSD information to a content view 2 which corresponds to the second remote control unit, and to display it.

For another example, in a case where identification information on the plurality of glasses and content view information is stored in the storage unit 180, the user viewing the content 1 through the glasses may request OSD information by using the input buttons provided on the glasses he or she is wearing.

In response to the request for OSD information, the corresponding glasses may transmit the OSD display command information including the identification information hereof to the display apparatus. Depending on the communication method, the OSD display command may be input through an interface unit 150 or an input unit 160. On receiving the OSD display command information, the control unit 170 may compare the identification information included in the inputted OSD display command information with the identification information stored in the storage unit 180, and control the signal processing unit 120 and the output unit 130 to add the OSD information to the image frames of the content that corresponds to the glasses sending the OSD display command information and display the result.

Meanwhile, the user viewing the second content through the second glasses may request OSD information using the input button provided in the second glasses that he or she is wearing. In response to such a request for OSD information, the second glasses transmit the OSD display command information which includes its identification information to the display apparatus. The control unit 170 which received the OSD display command information through the input unit 160 may compare the identification information included in the inputted OSD display command information and the identification information stored in the storage unit 180, and control the signal processing unit 120 and the output unit 130 to add the OSD information to the image frames of the second content that corresponds to the second glasses which sent the OSD display command information.

According to such a control command, the signal processing unit 120 may add the OSD information to at least one image frame from among the image frames on the first and second contents generated through the video processing unit 122. Therefore, the output unit 130 which outputs image frames of the first and second contents alternately may output the OSD information together with the content corresponding to the glasses that transmitted the OSD display command.

As in the aforementioned various exemplary embodiments, the OSD information may perform an additional operation on only some content views from among the plurality of contents views. The control unit 170 controls the operations of the OSD processing unit to control displaying or deleting of OSD information.

For example, in a state where OSD information is displayed on the first content view which is one of the plurality of content views, when the OSD display command regarding the second content view which is another one from among the plurality of contents views, the control unit 170 may delete the OSD information displayed on the first content view, and control the OSD processing unit to display the OSD information on the second content view.

For another example, in a state where the OSD information is displayed on the first content view which is one of the plurality of content views, when the OSD display command regarding the second content view which is another one from among the plurality of contents views, the control unit 170 may control the OSD processing unit to automatically delete the OSD information displayed on contents view 1, and to display the OSD information on content view 2.

According to various aforementioned exemplary embodiments, among the user viewing the content 1 through the glasses and the user viewing the content 2 through other glasses, only the user viewing the content 1 is able to view the OSD information. Therefore, each user may display various OSD menus and control processing of contents and check OSD information regarding the content of what he or she is viewing without interfering with other user's viewing.

As explained above, the OSD information may include at least one OSD menu to change the display attributes of at least one content from among the plurality of received contents. In one exemplary embodiment, the OSD information may include a screen adjustment OSD menu for optimization of size and brightness of a screen on which the content is displayed, or a channel adjustment OSD menu. While the OSD information including the above-mentioned OSD menu is displayed, the user may input a user set value through an input device such as a remote control unit or glasses that he or she is wearing.

If the user set value is inputted through the input device, the control unit 170 may control the signal processing unit 120 and the output unit 130 to change the display attributes of the content on which OSD information is displayed, in accordance with the inputted user set value. In one exemplary embodiment, the user viewing the content 1 through the glasses may select the screen adjustment OSD menu from among the plurality of OSD menus included in the OSD information which is displayed along with the content 1, by using his or her glasses. Accordingly, the glasses may transmit a command to display an OSD regarding screen adjustment to the display apparatus, and the output unit 130 may display the image frames of the content 1 added with the OSD menu for screen adjustment, in accordance with the control command of the control unit 170.

If the user changes the set value to adjust the screen size using the input buttons provided on the glasses the user is wearing while he or she is viewing the displayed menu, the glasses may send the corresponding user set value to the display apparatus. If the user set value is inputted, the control unit 170 may control the signal processing unit 120 and the output unit 130 to adjust the screen size of the content 1 on which the OSD information is displayed, according to the inputted user set value.

Accordingly, the signal processing unit 120 may adjust the screen size of the image frames with respect to the content 1 through the video processing unit 122, and the output unit 130 may display the image frames with respect to the content 1 which are adjusted at the signal processing unit 120.

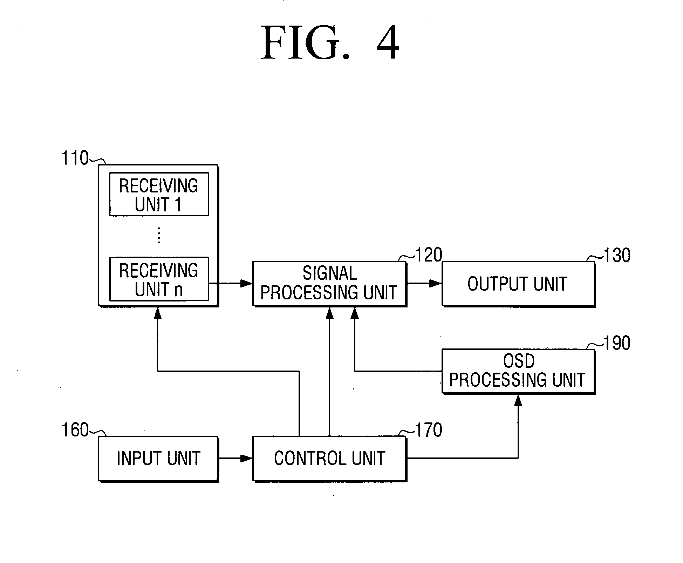

Meanwhile, the composition of display apparatus as in FIG. 2 may be changed in various ways according to exemplary embodiments. FIG. 4 is another block diagram illustrating a composition of the display apparatus according to another exemplary embodiment.

According to FIG. 4, the display apparatus includes a receiving unit 110, signal processing unit 120, output unit 130, input unit 160, control unit 170, and OSD processing unit 190.

The receiving unit 110 includes a plurality of receiving units each of which receives plurality of contents which are different from one another. The signal processing unit 120 processes each content received from the plurality of receiving units and forms a plurality of contents views. The output unit 130 displays each content view formed in the signal processing unit. The input unit 160 receives the OSD display command. The operation of the receiving unit 110, signal processing unit 120, output unit 130, input unit 160 were explained in the portion on FIG. 2, and thus repeated explanation will be omitted.

When the OSD display command is inputted, the control unit 170 determines the content view to display the OSD information from among a plurality of contents views. More specifically, as explained in the aforementioned various exemplary and are embodiments, the content view selected as the control target or the content view corresponding to the remote control unit which sent the OSD display command or the glasses may be determined as the object for displaying OSD information.

The OSD processing unit 190 generates OSD information to be displayed on the determined content view. In FIG. 2, it has been explained that signal processing unit 120 includes the OSD processing unit, but according to FIG. 4, the OSD processing unit 190 and the signal processing unit 120 are provided separately.

The OSD processing unit 190 designates a location to display the OSD information, and generates the OSD information to display on the corresponding location using font information, image information, and size information etc., and provides this information to the signal processing unit 120. The signal processing unit 120 mixes the provided OSD information and the image frame, and provides the mixed result to the output unit 130.

When the content view corresponding to the OSD display command is determined, the control unit 170 controls the OSD processing unit 190 to provide the OSD information to the signal processing unit 120 at the time of processing the determined content view. When the content view to display the OSD information is changed, the control unit 170 controls the OSD processing unit 190 to provide the OSD information at the time of processing the content view. Accordingly, displaying and deleting OSD information may be performed appropriately.

FIG. 4 illustrates only the composition for explaining the operations related to OSD processing, but in order for the display apparatus 100 to be synchronized with the glasses, it is a matter of course that various elements such as a sync signal generating unit 140, interface unit 150, storage unit 180 may further be included. That is, the composition of the display apparatus 100 may be changed in various ways according to exemplary embodiments. In addition, FIG. 4 only illustrates one OSD processing unit 190, but a plurality of OSD processing units may be provided.

Meanwhile, according to various aforementioned exemplary embodiments, only the contents views which correspond to OSD display commands from among the plurality of contents views were explained, but according to another exemplary embodiment, for specific OSD display commands, OSD information may be displayed on a plurality of contents views. In this case, each OSD information may be expressed differently from one another. The control unit 170 may control so that OSD information displayed on each content view is changed individually. That is, the shape, color, size, location, and content of OSD information may be changed in various ways. For example, in a case where an OSD menu display command is inputted for setting operations of the display apparatus 100, the control unit 170 may control the OSD signal processing unit 190 and signal processing unit 120 to include all OSD information in each content view.

The operation and composition of the display apparatus which displays OSD information for a specific content on the display apparatus for displaying a plurality of contents has been explained in detail.

Hereinbelow, the operation of the glasses will be explained in detail.

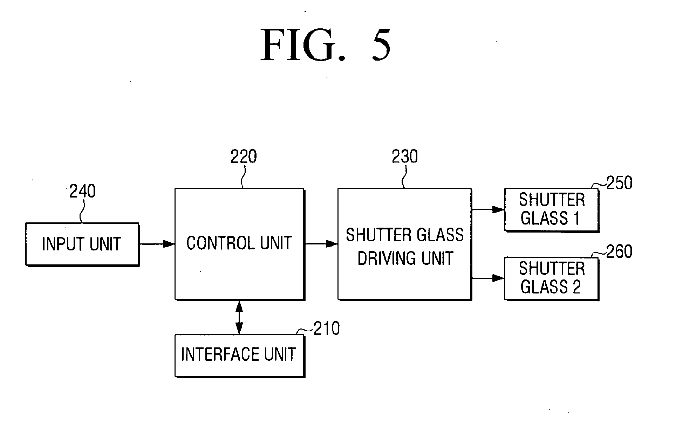

FIG. 5 is a block diagram of the glasses according to an exemplary embodiment.

The glasses of FIG. 5 may operate in association with the display apparatus which display a plurality of contents in alternating image frame unit, and may include an interface unit 210, a control unit 220, a shutter glass driving unit 230, an input unit 240, a first shutter glass 250, and a second shutter glass.

The interface unit 210 may communicate with the display apparatus.

According to an embodiment, the interface unit 210 may be the Bluetooth communicating module, and the interface unit 210 may receive the sync signals in the form of a transmission packet through Bluetooth communication with the display apparatus. The transmission packet may be synchronized with the display timing of the contents and include the time information to turn on/off the first and second shutter glasses 250, 260. The information included in the transmission packet will not be further described in detail since the foregoing explains the relevant information.

According to another embodiment, the interface unit 210 may be implemented as an IR receiving module to receive the sync signals in the form of infrared ray having specific frequencies. In the above example, the interface unit 210 may include the time information to turn on or off the first and second shutter glasses 250, 260 of the glasses to be in sync with the display timing of one of the plurality of contents.

According to another embodiment, the interface unit 210 may receive information about the image frame rate, or the image frame cycle of the respective contents from the display apparatus 100.

The control unit 220 may control the overall operation of the glasses. To be specific, the control unit 220 may control the operation of the shutter glass driving unit 230 by transmitting the sync signals received from the interface unit 210 to the shutter glass driving unit 230. That is, the control unit 220 may control the shutter glass driving unit 230 to generate driving signals to drive the first and second shutter glasses 250, 260, according to the sync signals.

The shutter glass driving unit 230 may generate the driving signals based on the sync signals received from the control unit 220. To be specific, based on the sync signals, the shutter glass driving unit 230 may open the first and second shutter glasses 250, 260 according to the display timing of one of the a plurality of contents displayed on the display apparatus 100.

The first and second shutter glasses 250, 260 may turn on or off the shutter glasses according to the driving signals received from the shutter glass driving unit 230. To be specific, the first and second shutter glasses 250, 260 may open the shutter glasses simultaneously when one of the plurality of contents is displayed, and close the shutter glasses simultaneously when other contents are displayed. Accordingly, the user wearing the glasses may view one content.

Additionally, the user may request the OSD information while viewing one content through the glasses he or she is wearing. The display apparatus may add the OSD information to the corresponding content and display the result. Accordingly, the user may view the content displayed by the display apparatus along with the OSD information added to the displayed content, corresponding to the time point at which the first and second shutter glasses 250, 260 are open simultaneously.

Meanwhile, regarding 3D contents, the first and second shutter glasses 250, 260 may alternately open and close. According to the driving signals, the first shutter glass 250 may open in the display timing of the left-eye image of the 3D content and the second shutter glass 260 may open in the display timing of the right-eye image of the 3D content.

The input unit 240 may receive a command to request OSD information. To this purpose, the input unit 240 may include input buttons to receive the command to request OSD information, and the input buttons may be the touch sensor or the operating button. If the command to request OSD information is inputted, the interface unit 210 may transmit a command to display OSD in response to the command to request OSD information to the display apparatus according to the control command of the control unit 220. Accordingly, the user may view the OSD information while also viewing the content through the glasses he or she is wearing.

While the OSD information is displayed, the input unit 240 may receive from the user a command to select at least one OSD menu from among a plurality of OSD menus included in the OSD information, and receive a user set value to change the content attributes based on the selected OSD menu.

The OSD information may include a screen adjustment OSD menu for optimization of size and brightness of a screen on which the content is displayed, or channel adjustment OSD menu, and the input unit 240 may receive a user set value regarding the OSD menu selected by the user from among the plurality of OSD menus. If the user set value is inputted through the input unit 240, the interface unit 210 may transmit the information regarding the user set value inputted by the user, in accordance with the control command of the control unit 220.

As explained above, through the glasses he or she is wearing, the user may concurrently view the OSD information as well as one content, and change the content display attributes by selecting one of the OSD menus included in the OSD information. Further, the user may view the content based on the display attributes the user has set through the glasses he or she is wearing.

The foregoing describes the respective components of the display apparatus and the glasses. Hereinbelow, a method of displaying OSD information with specific content on the display apparatus for displaying a plurality of contents will be explained in greater detail.

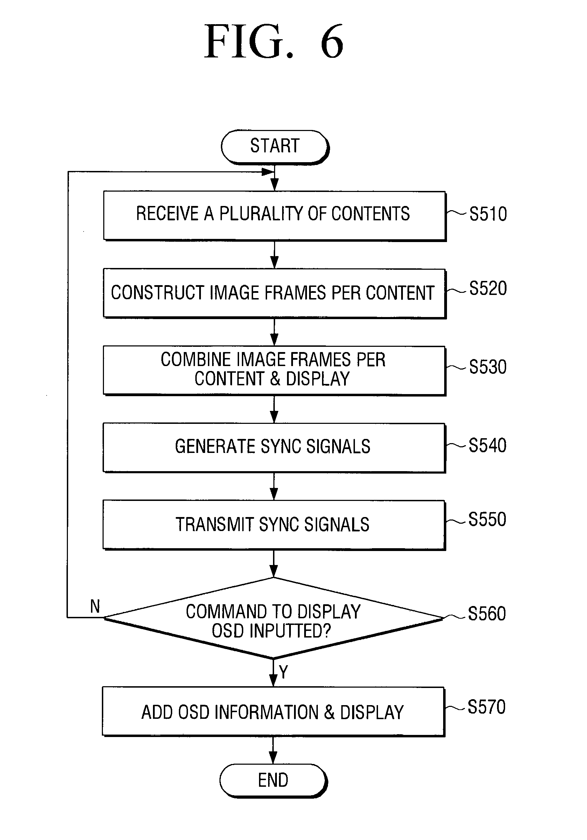

FIG. 6 is a flowchart provided to explain a method for displaying a plurality of contents and OSD information on the display apparatus according to an embodiment.

Referring to FIG. 6, at S510, the display apparatus may receive a plurality of different contents. To be specific, the display apparatus may receive the contents from outside through a plurality of tuners or from external device through at least one of interfaces including SCART, AV, HDMI, COMPONENT, or USB interfaces.

If the plurality of contents are received, at S520, the display apparatus may process the plurality of contents and construct the image frames of the respective contents, that is multi content views. Since the operation of constructing the image frames of the respective contents in the display apparatus has been described above by referring to FIG. 3, the method for constructing the image frame of the content will not be further described herein for the sake of brevity.

If the image frames of the plurality of contents are constructed, at S530, the display apparatus may combine the image frames of the plurality of contents and display the result. The display apparatus may alternately display the respective image frame of the contents at least one by one. More specifically, the display apparatus may then multiplex so that the image frames of the respective contents are arranged alternately. The display apparatus may then upscale the multiplexed data to the screen size to construct the multi content frame, and display the resultant multi content frame, that is a plurality of contents views.

As used herein, the 'multi content frame' refers to the frame data constructed for a plurality of users to view a plurality of contents each. The method for constructing the multi content frames may be implemented variously depending on the method for driving the display apparatus. Since the driving methods of the display apparatus have been explained above, detailed description thereof will be omitted for the sake of brevity.

Meanwhile, if the image frames of a plurality of contents are displayed, at S540, the display apparatus may generate the sync signals to synchronize the glasses corresponding to the respective contents, in accordance with the display timing of the respective contents. At S550, the display apparatus may transmit the generated sync signals to the glasses. The sync signals generated to synchronize with the glasses with the contents may be in the various formats and transmitted to the corresponding glasses.

According to an embodiment, the display apparatus may generate a plurality of infrared IR or RF sync signals having different frequencies and transmit the signals to the respective glasses.

According to another embodiment, the display apparatus may transmit the sync signals to the glasses in the form of a transmission packet according to the Bluetooth communication standard. To this end, the display apparatus may carry out pairing with the glasses and when pairing is completed, register the pairing information of the glasses such as glasses identification information. Accordingly, the display apparatus may match the display timing of the respective contents and the information about the glasses, and transmit the transmission packet to the glasses based on the glasses identification information previously stored by the pairing.

However, an embodiment will not be limited to the foregoing method; and accordingly, the display apparatus may generate the sync signals in other ways.

Meanwhile, if the glasses receive the transmission packet, the glasses may check the display timing in the received transmission packet. According to the display timing, the glasses may turn on or off the left-eye shutter glass and the right-eye shutter glass.

Accordingly, the user wearing the glasses may view only the content that is displayed at the time point of turning on the left-eye and right-eye shutter glasses, from among the plurality of contents alternately displayed on the display apparatus.

As explained above, at S550 and S560, if a command to display OSD is inputted from the input device, the display apparatus, which operates to generate and transmit the sync signals to the glasses, may add the OSD information to one of the plurality of contents that corresponds to the command to display OSD and display the result. To be specific, through the glasses the user is wearing, the user may view one of the plurality of contents alternately displayed on the display apparatus. While viewing the contents, the user may request the OSD information by using input device. The input device may be at least one of the remote control unit and the glasses. The OSD information may include at least one OSD menu to change the display attributes of at least one content from among the plurality of received contents. In one embodiment, the OSD information may include screen adjustment OSD menu for optimization of size and brightness of a screen on which the content is displayed, or channel adjustment OSD menu.

Accordingly, if a command to display OSD is inputted, thereby requesting the OSD information, the display apparatus may add the OSD information to one of the plurality of contents that corresponds to the inputted command to display OSD and display the result.

In one embodiment, while the image frames of the content 1 and content 2 are alternately displayed, the user may select the content to be added with the OSD information and request the OSD information by utilizing the input buttons provided on the remote control unit. For example, if the user inputs a command to select content 1 and request for the OSD information, the remote control unit may transmit the command to display OSD including the command to select the content 1.

According to a command to select content 1 included in a command to display OSD, the display apparatus may process to display the OSD information along with the image frames of the content 1, among the currently alternately displayed image frames of the contents 1, 2. Subsequently, the display apparatus may alternately display the image frames of the content 1 to which OSD information is added, and the image frames of the content 2. Accordingly, among the user viewing content 1 with the glasses and the user viewing content 2 with another glasses, only the user viewing content 1 with the glasses may view the OSD information.

Meanwhile, according to an additional aspect of the embodiment, the display apparatus may store information about a plurality of input devices. The plurality of input devices may be the remote control unit or the glasses. Accordingly, the information of the plurality of input devices stored in the display apparatus may be the identification information of the plurality of remote control units or the identification information of the plurality of glasses.

If a command to display OSD is inputted from one of the plurality of input devices, the display apparatus may add the OSD information to one of the plurality of contents that is determined to correspond to the input device transmitting the command to display OSD by using the identification information of the plurality of input devices, and display the result.

In one embodiment, the display apparatus may store the identification information a plurality of glasses and alternately display the image frames of content 1 and content 2. Meanwhile, the user viewing content 1 through the glasses may request the OSD information by utilizing the input buttons provided on the glasses he or he is wearing.

According to the request for OSD information, the glasses may transmit a command to display OSD including the glasses identification information to the display apparatus. If a command to display OSD is inputted, the display apparatus may compare the identification information included in the inputted command to display OSD and the pre-stored identification information of the plurality of glasses and add the OSD information to the image frame of the content corresponding to the glasses transmitting a command to display OSD. After that, the display apparatus may alternately display the image frames of content 1 added with the OSD information and the image frames of content 2. As a result, among the user viewing the content 1 through the glasses and the user viewing the content 2 through another glasses, only the user viewing the content 1 is able to view the OSD information.

Meanwhile, as explained above, the OSD information may include at least one OSD menu to change the display attributes of at least one content from among the plurality of received contents. In one embodiment, the OSD information may include screen adjustment OSD menu for optimization of size and brightness of a screen on which the content is displayed, or channel adjustment OSD menu. While the OSD information including the above-mentioned OSD menu is displayed, the user may input a user set value through an input device such as a remote control unit or glasses that he or she is wearing.

If the user set value is inputted through the input device, the display apparatus may change the display attributes of the content on which OSD information is displayed, in accordance with the inputted user set value. In one embodiment, the user viewing the content 1 through the glasses may select the screen adjustment OSD menu from among the plurality of OSD menus included in the OSD information which is displayed along with the content 1, by using his or her glasses. Accordingly, the glasses may transmit a command to display OSD regarding screen adjustment to the display apparatus, and the display apparatus may display the image frames of the content 1 added with the OSD menu for screen adjustment, in accordance with the control command of the control unit 170.

Upon viewing the OSD menu for screen adjustment through the glasses he or she is wearing, the user may change a set value to adjust the screen size, using the input buttons provided on his or her glasses. If the user set value is inputted, the glasses transmit the inputted user set value to the display apparatus. In accordance with the user set value as inputted from the glasses, the display apparatus may adjust the screen size of the content 1 on which OSD information is displayed, and display the result. Accordingly, the user is able to view the content 1 in the screen size he or she requested.

Meanwhile, programs to implement the methods according to embodiments may be stored and utilized in the various types of the recording medium.

To be specific, the code to implement the methods may be stored in various types of terminal-readable recording media such as, for example, RAM (Random Access Memory), flash memory, ROM (Read Only Memory), EPROM (Erasable Programmable ROM), EEPROM (Electronically Erasable and Programmable ROM), register, hard disk, removable disk, memory card, USB memory, or CO-ROM.

The foregoing exemplary embodiments and advantages are merely exemplary and are not to be construed as limiting the present invention. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

The features of multi-view mode described herein can be implemented in display systems using passive-type glasses. For example, in a dual-view mode, an image of the first view and an image of the second view with a different polarization are displayed on the same frame. This may be accomplished by a display panel using polarizing layers. The display panel having the polarizing layers can work in conjunction with polarized glasses to enable multiple users to view different video contents concurrently. In this regard, the display system employs first passive glasses having a pair of lenses polarized in a same first direction, which are adapted to enable a first wearer to only see images of the first view displayed on the display panel. And second passive glasses have a pair of lenses polarized in a same second direction, which are adapted to enable a second wearer to only see images of the second view displayed on the display panel. The first and second polarization directions are different from each other.

It is noted that any suitable technique may be used to display multiple views onto a same frame. For example, an image of the first view and an image of the second view can be interlaced onto a same frame by alternating pixel lines of the first and second views such that the odd numbered lines in the image frame are from the first view and the even numbered lines are from the second view.

According to an embodiment, when a command to display OSD is received by the display system, the control unit thereof determined which one of the first and second views to display OSD and controls the display panel to display the OSD information on the determined one of the first and second views while no OSD information is displayed on the other one of the first and second views while no OSD information is displayed on the other one of the first and second views. In response to receiving the command to display the OSD, one of the first and second views having the OSD information and the other view having no OSD information are alternatively displayed in a line-by-line manner on the display panel such that pixel lines representing the first view are viewable via the first passive glasses and pixel lines representing the second view are viewable via the second passive glasses.

Although a few preferred embodiments have been shown and described, it will be appreciated by those skilled in the art that various changes and modifications might be made without departing from the scope of the invention, as defined in the appended claims.

## Claims

1. A display apparatus (100) operable in a dual-view mode to enable a first user wearing first glasses (200-1) and a second user wearing second glasses (200-2) to concurrently view different video contents, the display apparatus (100) comprising:
a plurality of receiving units (110) which are operable to receive a plurality of different contents including at least a first video content and a second video content;
a signal processing unit (120) which processes the first video content and the second video content;
an output unit (130) including a display panel which displays a first view corresponding to the first video content and a second view corresponding to the second video content;
a control unit (170) which determines one of the first and second views to display on-screen display, OSD, information in response to receiving a command to display OSD and controls the output unit (130) to display the OSD information on the determined one of the first and second views while no OSD information is displayed on the other one of the first and second views
wherein, in response to receiving the command to display the OSD, one of the first and second views having the OSD information and the other view having no OSD information are displayed on the display panel such that images corresponding to the first view are viewable via the first glasses and images corresponding to the second view are viewable via the second glasses,
**characterized in that** :
the OSD information includes at least one OSD menu for changing display characteristics; and
the control unit (170) controls to delete the OSD information displayed on a first content view and to display the OSD information on a second content view, when a command to display OSD regarding the second content view is inputted, in a state where the OSD information is displayed on the first content view.

2. The display apparatus of claim 1, wherein the first and second glasses (200-1, 200-2) comprise active-shutter type glasses, and
the first view and the second view are alternatively displayed in a frame-by-frame manner on the display panel such that frames corresponding to the first view are viewable via the first glasses (200-1) and frames corresponding to the second view are viewable via the second glasses (200-2).

3. The display apparatus of claim 2, further comprising:
a sync signal generating unit (140) which generates sync signals which synchronize the first and second glasses (200-1, 200-2) to respective one of the first and second views according to a display timing thereof; and
an interface unit (150) which transmits the sync signals to the first and second glasses.

4. The display apparatus of claim 3, wherein the first glasses (200-1) are operated according to the sync signals so that shutters thereof are concurrently opened when frames for the first view are being displayed on the display panel and concurrently closed when frames for the second view are being displayed, and
the second glasses (200-2) are operated according to the sync signals so that shutters thereof are concurrently opened when frames for the second view are being displayed and concurrently closed when frames for the first view are being displayed.

5. The display apparatus of any preceding claim, further comprising:
a storage unit (180) which stores information about a plurality of input devices which correspond to each of the first and second views,
wherein, when the command to display OSD is received via one of the plurality of input devices, it is determined which one of the input devices transmitted the command and the OSD information is displayed on the one of the first and second views that corresponds to the input device transmitting the command to display OSD.

6. The display apparatus of claim 5, wherein each of the input devices comprises a remote control unit.

7. The display apparatus of any preceding claim, wherein the control unit (170):
consecutively selects a control target from among the plurality of contents according to a remote signal inputted from a remote control unit,
processes the content view of the control target according to the control signal when a control signal is inputted from the remote control unit in a state where one content view is selected as the control target, and
controls the OSD processing unit (190) to display OSD information on the content view which is determined as the control target at a point when a command to display OSD display is inputted from the remote control unit.

8. The display apparatus of any preceding claim, further comprising:
an OSD processing unit (190) which generates the OSD information to be displayed on the determined view and provides the generated OSD information to the output unit (130).

9. The display apparatus of any of claims 1 to 8, wherein:
the control unit (170) controls the signal processing unit (120) to change the display characteristics of the content view where the OSD information is displayed according to the changed user set value, when the user set value is changed in at least one OSD menu.

10. The display apparatus of any preceding claim, wherein the output unit (130) combines the plurality of contents views in image frame units, and displays the results.

11. The display apparatus of any preceding claim, wherein:
the first and second glasses (200-1, 200-2) comprise passive glasses, and
the first view and the second view are interlaced onto a same frame such that pixel lines representing the first view are viewable via the first passive glasses having a pair of lenses polarized in a same first direction and pixel lines representing the second view are viewable via the second passive glasses having a pair of lenses polarized in a same second direction different from the first direction.

12. The display apparatus of any preceding claim wherein:
the command to display OSD is inputted via one of the first and second glasses (200-1, 200-2), and
the OSD information is displayed on one of the first and second views that corresponds to one of the first and second glasses (200-1, 200-2) transmitting the command to display OSD.

## Patentansprüche

1. Anzeigevorrichtung (100), die in einem Dualansichtsmodus betriebsfähig ist, um es einem ersten Benutzer, der eine erste Brille (200-1) trägt, und einem zweiten Benutzer, der eine zweite Brille (200-2) trägt, zu ermöglichen, gleichzeitig unterschiedliche Videoinhalte anzusehen, wobei die Anzeigevorrichtung (100) Folgendes aufweist:
mehrere Empfangseinheiten (110), die betriebsfähig sind, um mehrere unterschiedliche Inhalte zu empfangen, die mindestens einen ersten Videoinhalt und einen zweiten Videoinhalt aufweisen;
eine Signalverarbeitungseinheit (120), die den ersten Videoinhalt und den zweiten Videoinhalt verarbeitet;
eine Ausgabeeinheit (130), die eine Anzeigetafel aufweist, die eine erste Ansicht, die dem ersten Videoinhalt entspricht, und eine zweite Ansicht anzeigt, die dem zweiten Videoinhalt entspricht;
eine Steuereinheit (170), die eine von der ersten und der zweiten Ansicht zum Anzeigen von Bildschirmanzeigeinformationen (On-Screen-Display - OSD) als Reaktion auf das Empfangen eines Befehls zum Anzeigen der OSD bestimmt und die Ausgabeeinheit (130) steuert, um die OSD-Informationen auf der bestimmten von der ersten und der zweiten Ansicht anzuzeigen, während keine OSD-Informationen auf der anderen von der ersten und der zweiten Anzeige angezeigt werden,
wobei als Reaktion auf das Empfangen des Befehls zum Anzeigen der OSD eine von der ersten und der zweiten Ansicht, die die OSD-Informationen aufweist, und die andere Ansicht, die keine OSD-Informationen aufweist, auf der Anzeigetafel angezeigt werden, derart, dass Bilder, die der ersten Ansicht entsprechen, über die erste Brille angesehen werden können, und Bilder, die der zweiten Ansicht entsprechen, über die zweite Brille angesehen werden können,
**dadurch gekennzeichnet, dass**:
die OSD-Informationen mindestens ein OSD-Menü zum Ändern von Bildschirmeigenschaften aufweisen; und
die Steuereinheit (170) das Löschen der OSD-Informationen, die auf einer ersten Inhaltsansicht angezeigt werden, und das Anzeigen der OSD-Informationen auf einer zweiten Inhaltsansicht steuert, wenn ein Befehl zum Anzeigen der OSD, der die zweite Inhaltsansicht betrifft, in einem Zustand eingegeben wird, in dem die OSD-Informationen auf der ersten Inhaltsansicht angezeigt werden.

2. Anzeigevorrichtung nach Anspruch 1, wobei die erste und die zweite Brille (200-1, 200-2) eine Brille des Active-Shutter-Typs aufweisen, und
die erste Ansicht und die zweite Ansicht abwechselnd rahmenweise auf der Anzeigetafel angezeigt werden, derart, dass Rahmen, die der ersten Ansicht entsprechen, über die erste Brille (200-1) angesehen werden können, und Rahmen, die der zweiten Ansicht entsprechen, über die zweite Brille (200-2) angesehen werden können.

3. Anzeigevorrichtung nach Anspruch 2, die ferner Folgendes aufweist:
eine Synchronisierungssignal-Erzeugungseinheit (140), die Synchronisierungssignale erzeugt, die die erste und die zweite Brille (200-1, 200-2) auf eine entsprechende von der ersten und der zweiten Ansicht gemäß einer zeitlichen Anzeigesteuerung davon synchronisieren; und
eine Schnittstelleneinheit (150), die die Synchronisierungssignale an die erste und an die zweite Brille überträgt.

4. Anzeigevorrichtung nach Anspruch 3, wobei die erste Brille (200-1) gemäß den Synchronisierungssignalen betrieben wird, derart, dass Blenden davon gleichzeitig geöffnet werden, wenn Rahmen für die erste Ansicht auf der Anzeigetafel angezeigt werden, und gleichzeitig geschlossen werden, wenn Rahmen für die zweite Ansicht angezeigt werden, und
die zweite Brille (200-2) gemäß den Synchronisierungssignalen betrieben wird, derart, dass Blenden davon gleichzeitig geöffnet werden, wenn Rahmen für die zweite Ansicht angezeigt werden, und gleichzeitig geschlossen werden, wenn Rahmen für die erste Ansicht angezeigt werden.

5. Anzeigevorrichtung nach einem der vorhergehenden Ansprüche, die ferner Folgendes aufweist:
eine Speichereinheit (180), die Informationen über mehrere Eingabegeräte speichert, die jeder von der ersten und der zweiten Ansicht entsprechen,
wobei, wenn der Befehl zum Anzeigen der OSD über eine von den mehreren der Eingabevorrichtungen empfangen wird, bestimmt wird, welche von den Eingabevorrichtungen den Befehl übertragen hat, und die OSD-Informationen auf der einen von der ersten und der zweiten Ansicht angezeigt werden, die dem Eingabegerät entspricht, das den Befehl zur Anzeige der OSD übermittelt.

6. Anzeigevorrichtung nach Anspruch 5, wobei jede von den Eingabevorrichtungen eine Fernsteuerungseinheit aufweist.

7. Anzeigevorrichtung nach einem der vorhergehenden Ansprüche, wobei die Steuereinheit (170):
aufeinanderfolgend ein Steuerungsziel unter den mehreren Inhalten gemäß einem von einer Fernsteuerungseinheit eingegebenen entfernten Signal auswählt;
die Inhaltsansicht des Steuerungsziels gemäß dem Steuersignal verarbeitet, wenn ein Steuersignal von der Fernsteuerungseinheit in einem Zustand eingegeben wird, in dem eine Inhaltsansicht als das Steuerungsziel ausgewählt wird, und
die OSD-Verarbeitungseinheit (190) steuert, um OSD-Informationen auf der Inhaltsansicht anzuzeigen, die als das Steuerungsziel bestimmt wird, an einem Punkt, wenn ein Befehl zum Anzeigen der OSD-Anzeige von der Fernsteuerungseinheit eingegeben wird.

8. Anzeigevorrichtung nach einem der vorhergehenden Ansprüche, die ferner Folgendes aufweist:
eine OSD-Verarbeitungseinheit (190), die die auf der bestimmten Ansicht anzuzeigenden OSD-Informationen bestimmt und die erzeugten OSD-Informationen der Ausgabeeinheit (130) bereitstellt.

9. Anzeigevorrichtung nach einem der Ansprüche 1 bis 8, wobei:
die Steuereinheit (170) die Signalverarbeitungseinheit (120) steuert, um die Anzeigemerkmale der Inhaltsansicht zu ändern, wo die OSD-Informationen gemäß dem geänderten durch den Benutzer eingestellten Wert angezeigt werden, wenn der durch den Benutzer eingestellte Wert in mindestens einem OSD-Menü geändert wird.

10. Anzeigevorrichtung nach einem der vorhergehenden Ansprüche, wobei die Ausgabeeinheit (130) die mehreren Inhaltsansichten in Bildrahmeneinheiten kombiniert und die Ergebnisse anzeigt.

11. Anzeigevorrichtung nach einem der vorhergehenden Ansprüche, wobei:
die erste und die zweite Brille (200-1, 200-2) eine passive Brille aufweisen, und
die erste und die zweite Ansicht auf einen selben Rahmen interlaced werden, derart, dass Pixellinien, die die erste Ansicht darstellen, über die erste passive Brille angesehen werden können, die ein Paar Linsen aufweist, die in eine selbe erste Richtung polarisiert sind, und Pixellinien, die die zweite Ansicht darstellen, über die zweite passive Brille angesehen werden können, die ein Paar Linsen aufweist, die in eine selbe zweite Richtung polarisiert sind, die sich von der ersten Richtung unterscheidet.

12. Anzeigevorrichtung nach einem der vorhergehenden Ansprüche, wobei:
der Befehl zum Anzeigen der OSD über eine von der ersten und der zweiten Brille (200-1, 200-2) eingegeben wird, und
die OSD-Informationen auf einer von der ersten und der zweiten Ansicht angezeigt werden, die einer von der ersten und der zweiten Brille (200-1, 200-2) entspricht, die den Befehl zum Anzeigen von OSD überträgt.

## Revendications

1. Appareil d'affichage (100) pouvant être mis en fonctionnement dans un mode à deux vues pour permettre à un premier utilisateur portant des premières lunettes (200-1) et à un second utilisateur portant des secondes lunettes (200-2) de voir simultanément des contenus vidéo différents, l'appareil d'affichage (100) comprenant :
une pluralité d'unités de réception (110) pouvant être mises en fonctionnement pour recevoir une pluralité de contenus différents comportant au moins un premier contenu vidéo et un second contenu vidéo ;
une unité de traitement de signaux (120) qui traite le premier contenu vidéo et le second contenu vidéo ;
une unité de sortie (130) comportant un panneau d'affichage qui affiche une première vue correspondant au premier contenu vidéo et une seconde vue correspondant au second contenu vidéo ;
une unité de commande (170) qui détermine l'une des première et seconde vues pour afficher des informations d'affichage à l'écran OSD (On-Screen Display) en réponse à la réception d'une commande d'affichage OSD et commande l'unité de sortie (130) pour afficher les informations OSD sur celle qui a été déterminée des premières et secondes vues alors qu'aucune information OSD n'est affichée sur l'autre des première et seconde vues,
dans lequel, en réponse à la réception de la commande d'affichage des informations OSD, l'une des première et seconde vues contenant les informations OSD et l'autre vue ne contenant pas d'informations OSD sont affichées sur le panneau d'affichage de manière à ce que des images correspondant à la première vue puissent être vues par l'intermédiaire des premières lunettes et que des images correspondant à la seconde vue puissent être vues par l'intermédiaire des secondes lunettes,
**caractérisé en ce que** :
les informations OSD comprennent au moins un menu OSD permettant de modifier des caractéristiques d'affichage ; et
l'unité de commande (170) commande la suppression des informations OSD affichées sur une première vue de contenu pour afficher les informations OSD sur une seconde vue de contenu lorsqu'une commande d'affichage d'informations OSD concernant la seconde vue de contenu est fournie en entrée, dans un état dans lequel les informations OSD sont affichées sur la première vue de contenu.

2. Appareil d'affichage selon la revendication 1, dans lequel les première et seconde lunettes (200-1, 200-2) comprennent des lunettes du type à obturateur actif, et
la première vue et la seconde vue sont affichées en alternance sur le panneau d'affichage par une méthode du type trame par trame de manière à ce que des trames correspondant à la première vue puissent être vues par l'intermédiaire des premières lunettes (200-1) et que des trames correspondant à la seconde vue puissent être vues par l'intermédiaire des secondes lunettes (200-2).

3. Appareil d'affichage selon la revendication 2, comprenant en outre :
une unité génératrice de signaux de synchronisation (140) qui génère des signaux de synchronisation synchronisant les première et seconde lunettes (200-1, 200-2) sur l'une respective des première et seconde vues conformément à un cadencement d'affichage de celles-ci ; et
une unité d'interface (150) qui transmet des signaux de synchronisation aux premières et secondes lunettes.

4. Appareil d'affichage selon la revendication 3, dans lequel les premières lunettes (200-1) sont mises en fonctionnement conformément aux signaux de synchronisation de manière à ce que leurs obturateurs soient simultanément ouverts lorsque des trames destinées à la première vue sont affichées sur le panneau d'affichage et sont simultanément fermées lorsque des trames destinées à la seconde vue sont affichées, et
les secondes lunettes (200-2) sont mises en fonctionnement conformément aux signaux de synchronisation de manière à ce que leurs obturateurs soient simultanément ouverts lorsque des trames destinées à la seconde vue sont affichées et à ce qu'ils soient simultanément fermés lorsque des trames destinées à la première vue sont affichées.

5. Appareil d'affichage selon l'une quelconque des revendications précédentes, comprenant en outre :
une unité de stockage (180) qui stocke des informations concernant une pluralité de dispositifs d'entrée qui correspondent à chacune des premières et secondes vues, dans lequel, lorsque la commande d'affichage d'informations OSD est reçue par l'intermédiaire de l'un de la pluralité de dispositifs d'entrée, on détermine lequel des dispositifs d'entrée a transmis la commande, et les informations OSD sont affichées sur celle des premières et secondes vues qui correspond au dispositif d'entrée transmettant la commande d'affichage d'informations OSD.

6. Appareil d'affichage selon la revendication 5, dans lequel chacun des dispositifs d'entrée comprend une unité de télécommande.

7. Appareil d'affichage selon l'une quelconque des revendications précédentes, dans lequel l'unité de commande (170) :
sélectionne consécutivement une cible de commande parmi la pluralité de contenus conformément à un signal distant fourni en entrée par une unité de télécommande, traite la vue de contenu de la cible de commande conformément au signal de commande lorsqu'un signal de commande est fourni en entrée à partir de l'unité de télécommande dans un état dans lequel une vue de contenu est sélectionnée en tant que cible de commande, et
commande l'unité de traitement OSD (190) pour afficher des informations OSD sur la vue de contenu qui est déterminée comme étant la cible de commande à un instant où une commande d'affichage d'informations OSD est fournie en entrée à partir de l'unité de télécommande.

8. Appareil d'affichage selon l'une quelconque des revendications précédentes, comprenant en outre :
une unité de traitement OSD (190) qui génère les informations OSD devant être affichées sur la vue déterminée et fournit les informations OSD générées à l'unité d'entrée (130).

9. Appareil d'affichage selon l'une quelconque des revendications 1 à 8, dans lequel :
l'unité de commande (170) commande l'unité de traitement de signal (120) pour modifier les caractéristiques d'affichage de la vue de contenu lorsque les informations OSD sont affichées conformément à la valeur de réglage d'utilisateur modifiée, lorsque la valeur de réglage d'utilisateur est modifiée dans au moins un menu OSD.

10. Appareil d'affichage selon l'une quelconque des revendications précédentes, dans lequel l'unité de sortie (130) combine la pluralité de vues de contenu en unités de trames d'images, et affiche les résultats.

11. Appareil d'affichage selon l'une quelconque des revendications précédentes, dans lequel :
les premières et secondes lunettes (200-1, 200-2) comprennent des lunettes passives, et
la première vue et la seconde vue sont entrelacées sur une même trame de manière à ce que des lignes de pixels représentant la première vue puissent être vues par l'intermédiaire des premières lunettes passives comportant une paire de lentilles polarisées dans une même première direction et à ce que des lignes de pixels représentant la seconde vue puissent être vues par l'intermédiaire des secondes lunettes passives comportant une paire de lentilles polarisées dans une même seconde direction qui est différente de la première direction.

12. Appareil d'affichage selon l'une quelconque des revendications précédentes, dans lequel :
la commande d'affichage OSD est fournie en entrée par l'intermédiaire de l'une des premières et secondes lunettes (200-1, 200-2), et
les informations OSD sont affichées sur l'une des première et seconde vues qui correspond à l'une des premières et secondes lunettes (200-1, 200-2) transmettant la commande d'affichage OSD.
